Europäisches Patentamt

European Patent Office

Office européen des brevets

(11) Numéro de publication: **0 532 710 B1**

(12)                            **FASCICULE  DE  BREVET  EUROPEEN**

(45) Date de publication de fascicule du brevet:  **18.01.95**   (51) Int. Cl.[6]: **C09D  5/08**

(21) Numéro de dépôt: **91919031.4**

(22) Date de dépôt: **11.04.91**

(86) Numéro de dépôt internationale :
**PCT/FR91/00299**

(87) Numéro de publication internationale :
**WO 91/16381 (31.10.91 91/25)**

(54) **COMPOSITION PIGMENTAIRE ANTICORROSIVE DESTINEE AU REVETEMENT.**

(30) Priorité: **12.04.90 FR 9004703**

(43) Date de publication de la demande:
**24.03.93 Bulletin  93/12**

(45) Mention de la délivrance du brevet:
**18.01.95 Bulletin  95/03**

(84) Etats contractants désignés:
**AT BE CH DE DK ES GB GR IT LI LU NL SE**

(56) Documents cités:
**FR-A- 1 529 230**

**PLATING AND SURFACE FINISHING, vol. 74, no. 10, pp. 40-44, October 1987, East Orange, US; H. KONNO et al.: "Chemical and electro- chemical modifications of zinc using orga- nic compounds"**

(73) Titulaire: **ETAT FRANCAIS Représenté par le délégué général pour l'armement 26, Boulevard Victor F-75996 Paris Armées (FR)**

(84) Etats contractants désignés:
**BE CH DE GB IT LI NL SE**

(73) Titulaire: **LA OUINOLEINE ET SES DERIVES S.A. 4, allée Armand-Camus F-92565 Rueil-Malmaison-Cédex (FR)**

(84) Etats contractants désignés:
**DK ES GR LU AT**

(72) Inventeur: **CAMBON, Christian 38, place du Pressoir F-83110 Sanary (FR)**

(74) Mandataire: **Le Moenner, Annie et al Délégation Générale pour l'Armement Bureau des Brevets et Inventions 26, Boulevard Victor F-00460 Armées (FR)**

**Description**

La présente invention concerne une composition pigmentaire anticorrosive destinée au revêtement.

L'invention s'applique plus particulièrement aux revêtements anticorrosifs notamment pour la construction navale et la protection des ouvrages industriels métalliques.

Les peintures constituent le moyen le plus courant de protection contre les risques de corrosion. Ce sont généralement des mélanges de pigments insolubles en suspension dans un milieu liquide, généralement organique et de liants polymères. Après application sur le substrat à revêtir, le mélange se durcit en laissant une pellicule solide, appelée feuil, adhérant à la surface à protéger.

Les pigments les plus efficaces et les plus utilisés sur les substrats métalliques sont le minium de plomb et le chromate de zinc.

Cependant, des législations entrées récemment en vigueur dans plusieurs pays d'Europe et du monde ont contraint l'industrie des peintures et vernis à remplacer les pigments anticorrosifs classiques, le plus souvent toxiques, par des produits moins dangereux pour la santé et l'environnement.

C'est ainsi que les peintures anticorrosives contenant plus de 1% de chromate de zinc ou de chromate de strontium doivent porter un étiquetage mentionnant le risque de cancer lié à leur utilisation.

Les compositions à base de métaux lourds tels que les composés de plomb, notamment le minium de plomb, font également l'objet d'une législation dissuasive quant à leur emploi.

Les conséquences néfastes de cette toxicité sur l'environnement et les dépenses nécessaires pour la protection des personnes en contact avec ces produits sont très importantes.

De nombreuses recherches ont été entreprises, dans le but de découvrir des pigments anticorrosifs qui soient à la fois aussi efficaces et aussi universels d'emploi que les chromates de zinc ou de strontium, mais qui présentent un caractère moins toxique pour l'homme et moins néfaste vis-à-vis de l'environnement.

L'emploi de phosphates de zinc a été d'abord proposé. Il est couramment admis, et l'expérience a montré que, malgré ses propriétés intéressantes, ce produit ne suffit pas à lui seul à apporter des performances anticorrosives du niveau de celles obtenues avec des chromates de zinc.

Par contre, on voit actuellement se multiplier dans le commerce des compositions pigmentaires à base de phosphates de zinc dits "activés" par diverses substances organiques ou divers sels métalliques tels que des composés à base d'aluminium, de molybdène, de calcium.

Malheureusement les résultats obtenus avec des peintures anticorrosives renfermant les pigments mentionnés précédemment sont souvent décevants car non durables, étant donné l'épuisement rapide des agents activants par dissolution ou par décomposition.

De plus, si certaines compositions sont parfois efficaces dans une famille de liants polymères donnée, cette efficacité est le plus souvent perdue lorsqu'on les introduit dans une autre famille de liants polymères.

En outre, de nombreuses compositions pigmentaires de ce type conduisent souvent à une mauvaise stabilité au stockage des peintures correspondantes, par augmentation de la viscosité et par prise en masse.

L'invention a pour but de proposer des compositions pigmentaires anticorrosives permettant de pallier les inconvénients précités, et en particulier, présentant les propriétés suivantes :

- efficacité contre la corrosion supérieure ou égale à celle des chromates de zinc, à concentration volumique égale et pour un liant identique,
- absence de toxicité et suppression des nuisances vis-à-vis de l'environnement,
- universalité d'emploi dans des formulations de peintures en milieu aqueux ou organique, contenant par exemple des liants acryliques, vinyliques, des résines alkydes, des résines époxydes, des polyuréthanes, du caoutchouc chloré,
- stabilité lors du stockage à long terme des formulations réalisées,

Les compositions pigmentaires anticorrosives selon l'invention contiennent de l'hydroxy-8- quinoléate de zinc en qualité d'agent de synergie contre la corrosion.

Selon un mode réalisation préféré, on associe à l'hydroxy-8- quinoléate de zinc, au moins l'un des pigments suivants : phosphate de zinc, phosphate de fer, phosphate de chrome, phosphate de manganèse, phosphate d'aluminium, oxyde d'aluminium, ferrite de calcium, ferrite de zinc, ferrite de magnésium, ferrite de baryum, ferrite de fer, borosilicate de calcium, borosilicate de baryum, phosphosilicate de calcium, phosphosilicate de baryum.

De préférence les compositions selon l'invention sont constituées par un mélange pulvérulent de pigments comprenant, en combinaison, les pourcentages étant exprimés par rapport au poids total du mélange de pigments,

a) 0,5% à 99,5% en poids d'hydroxy-8-quinoléate de zinc.

b) 0,5% à 99,5% en poids d'au moins un des pigments suivants : phosphate de zinc, phosphate de fer, phosphate de chrome, phosphate de manganèse, phosphate d'aluminium, oxyde d'aluminium, ferrite de calcium, ferrite de zinc, ferrite de magnésium, ferrite de baryum, ferrite de fer, borosilicate de calcium, borosilicate de baryum, phosphosilicate de calcium, phosphosilicate de baryum. Le complément étant constitué des pigments connus dans ce type d'application.

De préférence, le pourcentage en poids de constituant a est compris entre 5 et 15%, et celui du constituant b est compris entre 30 et 60%.

Avantageusement, le constituant b est un phosphate de zinc, par exemple le phosphate de zinc dihydraté, et préférentiellement le diphosphate de zinc tétrahydraté $Zn_3 (PO_4)_2, 4H_2O$.

Parmi les compositions préférées, on peut citer les mélanges contenant de 5 à 15% en poids d'hydroxy-8-quinoléate de zinc et de 30 à 60% en poids de diphosphate de zinc tétrahydraté.

L'hydroxy-8 quinoléate de zinc, de formule $Zn (C_9 H_6 O N)_2, 2H_2O$, est un composé organométallique connu de poids moléculaire 389,4. Il se présente sous la forme d'une poudre vert jaunâtre pratiquement insoluble dans l'eau et dans la plupart des solvants organiques.

Les dérivés de l'hydroxy-8-quinoléine sont utilisés en pharmacie humaine et vétérinaire pour leurs propriétés antiseptiques.

Les hydroxy-8-quinoléates notamment de métaux divalents sont également utilisés en qualité de fongicides, dans le domaine de l'agriculture.

Cependant, l'hydroxy-8-quinoléate de zinc n'est pas connu pour ses propriétés inhibitrices de corrosion et n'est pas utilisé dans les peintures ni les vernis.

Quant au constituant b de la composition, il est choisi parmi les phosphates, les ferrites, les borosilicates, les phosphosilicates, les oxydes de certains métaux.

Les chromates, les phosphates, les borates, les silicates sont connus en qualité d'inhibiteurs de corrosion.

Le constituant b est constitué préférentiellement par des phosphates, et plus particulièrement par le diphosphate de zinc tétrahydraté $Zn_3 (PO_4)_2, 4H_2O$. Ce dernier composé est utilisé dans l'industrie des peintures et vernis.

De façon surprenante, l'association d'hydroxy-8-quinoléate de zinc, et des composés inhibiteurs de corrosion ci-dessus mentionnés en qualité de constituant b, en particulier les phosphates métalliques, exalte les propriétés anticorrosives de chacun des constituants.

En effet, lorsqu'on introduit des compositions pigmentaires selon l'invention dans des formulations de peintures, on met en évidence un effet de synergie conduisant à une capacité anticorrosive supérieure ou égale à celle des chromates de zinc dans les formulations considérées.

Les formulations de peintures peuvent être de tout type connu, comme indiqué précédemment.

Les exemples fournis ci-après, à titre non limitatif illustrent l'efficacité contre la corrosion de peintures renfermant les compositions pigmentaires selon l'invention ainsi que leur remarquable stabilité au stockage et leur adhérence, comparativement à des peintures anticorrosives contenant du chromate de zinc.

En particulier, on a réalisé des formulations de peintures anticorrosives de la même famille, l'une à base d'une combinaison d'hydroxy-8-quinoléate de zinc et de diphosphate de zinc tétrahydraté selon l'invention, les autres respectivement à base de chromate de zinc et à base d'autres associations pigmentaires disponibles dans le commerce et proposées comme alternatives à l'emploi de chromates de zinc.

Parmi ces compositions pigmentaires du commerce, on peut citer celles à base de ferrite de calcium, de phosphate de zinc activé, de phosphate basique de zinc et de molybdène, de borosilicate de calcium, de molybdate de zinc, de triphosphate d'aluminium modifié.

On a comparé les comportements de ces peintures lors de certains essais d'adhérence sur des supports métalliques.

Les résultats obtenus figurent dans les exemples 1 à 5.

L'exemple 6 concerne une formulation de peinture primaire réactive au butyralpolyvinylique. Il montre l'efficacité vis-à-vis de la corrosion d'une formulation selon l'invention par rapport à une formulation contenant du chromate de zinc.

Les résultats obtenus mettent en évidence, dans les formulations testées, la supériorité des compositions pigmentaires selon l'invention, contenant de l'hydroxy-8-quinoléate de zinc.

## EXEMPLE 1

On prépare une formulation de peinture anticorrosive du type alkyde (famille AFNOR I classe 4a) renfermant des pigments selon l'invention et on la compare à 2 peintures témoins de composition semblable, respectivement à base de chromate de zinc (1) et de ferrite de calcium (2). Les constituants de ces 3 formations de peintures figurant dans le tableau ci-dessous.

| DESIGNATION CONSTITUANTS | PARTIES EN POIDS (INVENTION) | PARTIES EN POIDS (TEMOIN(1)) | PARTIES EN POIDS (TEMOIN (2)) |
|---|---|---|---|
| PIGMENTS | | | |
| HYDROXY-8- QUINOLEATE DE ZINC | 1,50 | - | - |
| PHOSPHATE DE ZINC TETRA-HYDRATE | 18,00 | - | - |
| CHROMATE DE ZINC TYPE BASIQUE | - | 23,00 | - |
| FERRITE DE CALCIUM | - | - | 24,00 |
| DIOXYDE DE TITANE (RUTILE) | 7,00 | 5,00 | 7,00 |
| OXYDE DE FER JAUNE | 6,50 | - | 7,50 |
| OXYDE DE FER ROUGE VIOLACE | 1,50 | 2,00 | - |
| TALC MICRONISE | 5,00 | 5,00 | 5,00 |
| OXYDE DE ZINC NON ACICULAIRE | 5,50 | 8,00 | - |
| RESINES ET ADJUVANTS | | | |
| RESINE ALKYDE LONGUE en huile (70% dans le white spirit) | 33,00 | 40,00 | 33,00 |
| SICCATIF NAPHTENATE DE PLOMB | 1,00 | 1,20 | 1,20 |
| SICCATIF NAPHTENATE DE COBALT | 0,20 | 0,20 | 0,20 |
| SICCATIF NAPHTENATE DE MANGANESE | 0,10 | 0,10 | 0,10 |
| SOLVANTS ET DILUANTS | | | |
| WHITE SPIRIT | 13,70 | 13,50 | 13,70 |
| DIPENTENE | 2,00 | 2,00 | 2,00 |
| T O T A U X | 100,00 | 100,00 | 100,00 |

Les caractéristiques physico-chimiques des formulations de peintures anticorrosives selon l'invention et de celle à base de chromate de zinc sont mentionnées dans le tableau suivant :

| PRINCIPALES CARACTERISTIQUES PHYSICO-CHIMIQUES DES FORMULATIONS | FORMULATIONS DU TYPE ALKYDE (FAMILLE AFNOR I CLASSE 4a) | |
|---|---|---|
| DESIGNATION | INVENTION | TEMOIN |
| Extrait en poids (%) | 72,2 | 71,8 |
| Extrait sec en volume (%) | 53,2 | 52,8 |
| Pigments (% volume du feuil sec) | 33,2 | 29,9 |
| Pigments (% en poids de peinture) | 45,0 | 43,0 |
| Finesse de broyage | 7 | 7 |
| Masse volumique peinture (g/cm$^3$) | 1,33 | 1,32 |

On applique les formulations selon l'invention et des 2 témoins cités en deux couches sur des éprouvettes en acier ayant subi deux types de préparation de surface : un décapage au degré SA3 selon la norme suédoise n° SIS 05 59 00 1967 ou une préparation CST3 selon la même norme (acier rouillé brossé).

L'épaisseur totale moyenne du feuil sec est de 75 à 86 micromêtres.

Les résultats des essais obtenus avec la formulation de peinture selon l'invention par rapport à ceux obtenus avec les 2 formulations témoins sont résumés dans le tableau ci-après.

| ESSAIS COMPARATIFS REALISES DESIGNATION | PROTOCOLES OU NORMES DE REFERENCE | RESULTATS Invention comparé au témoin (1) | | RESULTATS Invention comparée au témoin (2) | |
|---|---|---|---|---|---|
| | | ACIER SAS3 | ACIER CST3 | ACIER SAS3 | ACIER CST3 |
| Essai accéléré de corrosion au brouillard salin (1000 heures) | Protocole DPCN 1051/CERTSM 87 | <=> | ++ | + | ++ |
| Exposition à la chaleur humide (3 semaines) | G621 -P10- 4 312/1 | ++ | | <=> | |
| Adhérence sur quadrillage | AFNOR NFT 30038 | <=> | <=> | - | - |
| Essai de résistance à la propagation de la flamme (RPF) | G621 P10 -4-412 | <=> | | • | |
| Essai d'impact par chute d'une masse (avant brouillard salin) | AFNOR NFT 30030 | <=> | <=> | <=> | <=> |
| Essai d'adhérence sous jet d'eau haute pression 180 bars | Protocole DPCN/ CERTSM | <=> | <=> | <=> | <=> |
| Essai de flexibilité au mandrin de 8 mm | G621 P10-2-11 | <=> | <=> | <=> | <=> |
| Aptitude au stockage en magasin 1 an (évolution de la viscosité) | Mesures périodiques de la Viscosité KREBS-STORMER | <=> | | <=> | |

## LEGENDE

- = comportement légèrement inférieur à celui du témoin
<=> = comparable à celui du témoin
+ = légèrement supérieur à celui du témoin
++ = très supérieur à celui du témoin

## EXEMPLE 2

On prépare une formulation de peinture anticorrosive du type époxyvinyl-polyamide (famille AFNOR 1 classe 6b 7a 1) renfermant des pigments selon l'invention et on la compare à 2 peintures témoins respectivement à base de chromate de zinc (1) et d'un phosphate de zinc activé du commerce (2).
Les constituants de ces trois formulations de peintures figurent dans le tableau ci-dessous.

6

| DESIGNATION CONSTITUANTS | PARTIES EN POIDS (INVENTION) | | PARTIES EN POIDS (TEMOIN (1)) | | PARTIES EN POIDS (TEMOIN (2)) | |
|---|---|---|---|---|---|---|
| PIGMENTS | ELEMENT A | ELEMENT B | ELEMENT A | ELEMENT B | ELEMENT A | ELEMENT B |
| HYDROXY-8-QUINOLEATE DE ZINC | 1,6 | - | - | - | - | - |
| PHOSPHATE DE ZINC TETRAHYDRATE | 18,0 | - | - | - | - | - |
| CHROMATE DE ZINC TYPE INSOLUBLE | - | - | 13,0 | - | - | - |
| PHOSPHATE DE ZINC ACTIVE DU COMMERCE | - | - | - | - | 19,6 | - |
| OXYDE DE FER JAUNE SYNTHETIQUE | 6,0 | - | 11,8 | - | 6,0 | - |
| OXYDE D'ANTIMOINE | 4,0 | - | 6,0 | - | 4,0 | - |
| ORANGE ORGANIQUE | 0,3 | - | 0,4 | - | 0,3 | - |
| TALC MICRONISE | 4,0 | - | - | - | 4,0 | - |
| RESINES ET ADJUVANTS | | | | | | |
| RESINE EPOXYDIQUE SOLIDE TYPE 1 | 16,0 | - | 17,0 | - | 16,0 | - |
| ACETOCHLORURE DE POLYVYNILE HYDROLYSE | 4,0 | - | 4,3 | - | 4,0 | - |
| RESINES COMPLEMENTAIRES ET ADDITIFS DE TENSION | 1,1 | - | 1,5 | - | 1,1 | - |
| POLYAMINOAMIDE à 70% ES | - | 71,0 | - | 71,0 | | 71,0 |
| SOLVANTS ET DILUANTS | | | | | | |
| SOLVANTS CETONIQUES | 27,0 | - | 27,5 | - | 27,0 | - |
| SOLVANT NAPHTA | 18,0 | - | 18,3 | - | 18,0 | - |
| ETHOXYPOPANOL | - | 21,0 | - | 21,0 | - | 21,0 |
| BUTANOL - i | - | 8,0 | - | 8,0 | - | 8,0 |
| T O T A U X | 100 | 100 | 99,8 | 100 | 100 | 100 |
| dosages ( Elément A ( Elément B | A : 100g B : 16g | | A : 100g B : 17g | | A : 100g B : 16g | |

Les caractéristiques physico-chimiques des formulations de peintures anticorrosives selon l'invention et de celle à base de chromate de zinc sont mentionnées dans le tableau suivant :

| PRINCIPALES CARACTERISTIQUES PHYSICO-CHIMIQUES DES FORMULATIONS | FORMULATIONS DU TYPE EPOXYVINYL-POLYAMIDE (FAMILLE AFNOR I CLASSE - 6b 7a 1) | |
|---|---|---|
| DESIGNATION | INVENTION | TEMOIN |
| Extrait sec en poids (%) | 53,8 | 52,9 |
| Extrait sec en volume (%) | 35,9 | 34,7 |
| Pigments (% volume du feuil sec) | 30,3 | 22,5 |
| Pigments (% poids de la peinture) | 29,2 | 26,7 |
| Masse volumique (A + B) | 1,17 | 1,17 |

On applique les formulations selon l'invention et des 2 témoins cités en deux couches sur des éprouvettes en acier ayant subi la préparation de surface de type SA3 selon la norme suédoise n° SIS 055900 - 1967.

L'épaisseur totale moyenne du feuil sec est de 50 à 60 micromêtres.

Les résultats des essais obtenus avec la formulation de peinture selon l'invention par rapport à ceux obtenus avec les 2 formulations témoins sont résumés dans le tableau ci-après.

```
------------------------------------------------------------------------
! ESSAIS COMPARATIFS        ! PROTOCOLES OU  ! RESULTATS  ! RESULTATS  !
!      REALISES             !   NORMES DE    ! Invention  ! Invention  !
!                           !   REFERENCE    !comparée au ! comparée au!
!      DESIGNATION          !                !témoin (1)  ! témoin (2) !
!---------------------------!----------------!------------!------------!
!Essai accéléré de corrosion !Protocole DPCM !            !            !
!au brouillard salin         !5318 ET/SM     !     +      !     +      !
!1200 h                      !du 29/06/87    !            !            !
!---------------------------!----------------!------------!------------!
!Résistance à la propagation de!G621-22.261  !    (=)     !    (=)     !
!la flamme (RPF)             !               !            !            !
!---------------------------!----------------!------------!------------!
!Adhérence par arrachement   !AFNOR NFT 30062!     -      !     -      !
!                            !               !            !            !
!---------------------------!----------------!------------!------------!
!Contrôle de l'adhérence par !(angle 30°)    !    (=)     !    (=)     !
!double fente en croix après !               !            !            !
!exposition au brouillard salin!             !            !            !
!1200 h                      !               !            !            !
!---------------------------!----------------!------------!------------!
!Essai d'impact par chute d'une!AFNOR NFT 30030!   (=)     !    (=)     !
!masse (avant brouillard salin)!             !            !            !
!---------------------------!----------------!------------!------------!
!Essai d'impact par chute d'une!AFNOR NFT 30030!   (=)     !    (=)     !
!masse (après brouillard salin)!             !            !            !
!---------------------------!----------------!------------!------------!
!Adhérence par quadrillage   !AFNOR NFT 30038!    (=)     !    (=)     !
!(avant brouillard salin)    !               !            !            !
!---------------------------!----------------!------------!------------!
!Adhérence par quadrillage   !AFNOR NFT 30038!    (=)     !     +      !
!après exposition au         !               !            !            !
!brouillard salin            !               !            !            !
!---------------------------!----------------!------------!------------!
!Essai d'adhérence sous jet  !Protocole DPCM/!    (=)     !    (=)     !
!d'eau haute pression 180 bars!CERTSM        !            !            !
!(avant brouillard salin)    !               !            !            !
!---------------------------!----------------!------------!------------!
!Essai d'adhérence sous jet  !Protocole DPCM/!     +      !     +      !
!d'eau haute pression 180 bars!CERTSM        !            !            !
!(après brouillard salin)    !               !            !            !
!---------------------------!----------------!------------!------------!
!Aptitude au stockage en     !Mesures périodi-!   (=)     !     +      !
!magasin 1 an                !ques de la     !            !            !
!(évolution de la viscosité) !viscosité      !            !            !
!                            !KREBS-STORMER  !            !            !
------------------------------------------------------------------------
```

*LEGENDE*

```
  -    =   comportement légèrement inférieur à celui du témoin
 (=)   =   comparable à celui du témoin.
  +    =   légèrement supérieur à celui du témoin
 + +   =   très supérieur à celui du témoin
```

EXEMPLE 3

On prépare une formulation de peinture anticorrosive du type polyuréthane modifié (famille AFNOR I 7a 1-6a) renfermant des pigments selon l'invention et on la compare à 2 peintures témoins de composition

# EP 0 532 710 B1

semblable, respectivement à base de chromate de zinc (1) et à base de phosphate basique de zinc et de molybdène (2).

Les constituants de ces 3 formulations de peintures figurent dans le tableau ci-dessous.

| DESIGNATION CONSTITUANTS | PARTIES EN POIDS (INVENTION) | | PARTIES EN POIDS (TEMOIN (1)) | | PARTIES EN POIDS (TEMOIN (2)) | |
|---|---|---|---|---|---|---|
| PIGMENTS | ELEMENT A | ELEMENT B | ELEMENT A | ELEMENT B | ELEMENT A | ELEMENT B |
| HYDROXY-8-QUINOLEATE DE ZINC | 1,9 | - | - | - | - | - |
| PHOSPHATE DE ZINC TETRAHYDRATE | 7,7 | - | - | - | - | - |
| CHROMATE DE ZINC TYPE INSOLUBLE | - | - | 11,7 | - | | |
| PHOSPHATE BASIQUE DE ZINC ET DE MOLYBDENE | - | - | - | - | 12,95 | - |
| TRIOXYDE D'ANTIMOINE | 10,0 | | 10,1 | | 10,00 | - |
| OXYDE DE FER NOIR SYNTHETIQUE | 4,0 | | 0,5 | | 4,00 | - |
| TALC MICRONISE | 3,0 | | 3,7 | | 3,00 | - |
| VERT ORGANIQUE | 0,3 | | 1,5 | | 0,30 | - |
| RESINES ET ADJUVANTS | A | B | A | B | A | B |
| POLYOL SOLIDE 3% OH | 7,0 | | 7,0 | | 7,00 | - |
| ACETOCHLORURE DE POLYVYNILE HYDROLYSE | 12,0 | | 12,0 | | 12,00 | - |
| AGENT THIXOTROPANT | 0,5 | | 0,5 | | 0,50 | - |
| TRIARYLPHOSPHATE | 2,4 | | 2,4 | | 2,40 | - |
| LECITHINE DE SOJA | 0,1 | | 0,1 | | 0,10 | - |
| DESMODUR L67 | - | 50,0 | - | 50,0 | - | 50,00 |
| SOLVANTS ET DILUANTS | A | B | A | B | A | B |
| METHYLISOBUTYLCETONE | 40,5 | - | 34,0 | - | 40,50 | - |
| XYLENE | 9,5 | - | 16,0 | - | 9,50 | - |
| TOLUENE ANHYDRE | - | 50,0 | - | 50,0 | - | 50,00 |
| TOTAUX | 98,9 | 100,0 | 100,0 | 100,0 | 102,25 | 100,00 |
| dosages en poids correspondants | ELEMENT A : 100g<br>ELEMENT B : 3g | | ELEMENT A : 100g<br>ELEMENT B : 3,4g | | ELEMENT A : 100g<br>ELEMENT B : 3,5g | |

Les caractéristiques physico-chimiques de ces deux formulations de peintures anticorrosives selon l'invention et de celle à base de chromate de zinc sont mentionnées dans le tableau suivant :

| PRINCIPALES CARACTERISTIQUES PHYSICO-CHIMIQUES DES FORMULATIONS | FORMULATIONS DU TYPE POLYURETHANE MODIFIE (FAMILLE AFNOR I CLASSE 7a1-6a) | |
|---|---|---|
| DESIGNATION | INVENTION | TEMOIN |
| Extrait sec en poids (%)<br>Extrait sec en volume (%)<br>Pigments (% volume du feuil sec) | 50,56<br>environ 30<br>environ 31 | 50,00<br>environ 29<br>environ 31 |

On applique les formulations selon l'invention et des 2 témoins cités en deux couches sur des éprouvettes en acier ayant subi une préparation de surface de type SA3 selon la norme suédoise SIS 05 59 00 - 1967.

L'épaisseur totale moyenne du feuil sec est de 150 micromètres.

Les résultats des essais obtenus avec la formulation de peinture selon l'invention par rapport à ceux obtenus avec les formulations témoins sont résumés dans le tableau ci-après.

| ESSAIS COMPARATIFS REALISES DESIGNATION | PROTOCOLES OU NORMES DE REFERENCE | RESULTATS Invention comparée au témoin (1) | RESULTATS Invention comparée au témoin (2) |
|---|---|---|---|
| Essai accéléré de corrosion au brouillard salin 1500 h | Protocole DPCM n°1051/CERTSM/87 | + | (=) |
| Exposition à la chaleur humide | G621-P10-4 312/1 | (=) | (=) |
| Adhérence par quadrillage avant exposition au brouillard salin | AFNOR NFT 30038 | (=) | (=) |
| Adhérence par quadrillage après exposition au brouillard salin | AFNOR NFT 30038 | (=) | (=) |
| Essai d'impact par chute d'une masse (avant brouillard salin) | AFNOR NFT 30030 | (=) | (=) |
| Essai d'impact par chute d'une masse (après brouillard salin) | AFNOR NFT 30030 | (=) | (=) |
| Essai d'adhérence par arrachement (avant brouillard salin) | AFNOR NFT 30062 | + | + |
| Essai d'adhérence par arrachement (après brouillard salin) | AFNOR NFT 30062 | + + | + + |
| Essai d'adhérence sous jet d'eau haute pression 180 bars (avant brouillard salin) | PROTOCOLE DPCM/CERTSM | + + | + + |
| Essai d'adhérence sous jet d'eau haute pression 180 bars (après brouillard salin) | PROTOCOLE DPCM/CERTSM | + + | + + |
| Aptitude au stockage en magasin 1 an (évolution de la viscosité) | Mesures périodiques de la viscosité KREBS-STORMER | + | (=) |
| Essai d'exposition aux embruns (1 an) | G621-P10-4-212 pupitre d'exposition aux embruns situé à la jetée de PIPAOY (rade de Toulon) | (=) | + |

LEGENDE :
- = comportement légèrement inférieur à celui du témoin
(=) = comparable à celui du témoin.
+ = légèrement supérieur à celui du témoin
+ + = très supérieur à celui du témoin.

EXEMPLE 4

On prépare une formulation de peinture anticorrosive du type vinylique (famille AFNOR I classe 7a 1) renfermant des pigments selon l'invention et on la compare à 5 peintures témoins de composition semblable, respectivement à base de chromate de zinc (1), à base de borosilicate de calcium du commerce (2), à base de molybdate de zinc (3), à base de phosphate basique de zinc et de molybdène (4) et à base d'un triphosphate d'aluminium modifié du commerce (5).

Les constituants de ces 6 formulations de peinture figurent dans le tableau ci-dessous.

| DESIGNATION CONSTITUANTS | PARTIES EN POIDS INVENTION | PARTIES EN POIDS TEMOIN(1) | PARTIES EN POIDS TEMOIN(2) | PARTIES EN POIDS TEMOIN(3) | PARTIES EN POIDS TEMOIN(4) | PARTIES EN POIDS TEMOIN(5) |
|---|---|---|---|---|---|---|
| PIGMENTS | | | | | | |
| HYDROXY-8-QUINOLEATE DE ZINC | 1,9 | - | - | - | - | - |
| PHOSPHATE DE ZINC TETRAHYDRATE | 7,4 | - | - | - | - | - |
| CHROMATE DE ZINC TYPE INSOLUBLE | - | 9,0 | - | - | - | - |
| BOROSILICATE DE CALCIUM | - | - | 8,74 | - | - | - |
| MOLYBDATE DE ZINC | - | - | - | 17,0 | - | - |
| PHOSPHATE BASIQUE DE ZINC ET DE MOLYBDENE | - | - | - | - | 12,43 | - |
| TRIPHOSPHATE D'ALUMINIUM MODIFIE | - | - | - | - | - | 10,42 |
| TALC MICRONISE | 2,0 | 5,5 | 2,00 | 2,0 | 2,0 | 2,0 |
| NOIR DE CARBONE | 0,2 | 0,2 | 0,2 | 0,2 | 0,2 | 0,2 |
| OXYDE DE FER JAUNE SYNTHETIQUE | 2,0 | - | 2,00 | 2,0 | 2,0 | 2,0 |
| RESINES ET ADJUVANTS | | | | | | |
| ACETOCHLORURE DE POLYVINYLE HYDROLYSE | 16,0 | 16,0 | 16,0 | 16,0 | 16,0 | 16,0 |
| TRIARYLPHOSPHATE | 1,5 | 1,5 | 1,5 | 1,5 | 1,5 | 1,5 |
| AGENT ANTISEDIMENTATION | 0,5 | 0,5 | 0,5 | 0,5 | 0,5 | 0,5 |
| SOLVANTS ET DILUANTS | | | | | | |
| METHYLISOBUTYLCETONE | 48,3 | 43,0 | 48,3 | 48,0 | 48,3 | 48,3 |
| TOLUENE | 9,5 | 24,3 | 9,5 | 9,5 | 9,5 | 9,5 |
| XYLENE | 9,5 | - | 9,5 | 9,5 | 9,5 | 9,5 |
| TOTAUX | 98,8 | 100,0 | 98,24 | 106,5 | 101,93 | 99,92 |

Les caractéristiques physico-chimiques des formulations de peintures anticorrosives selon l'invention et de celle à base de chromate de zinc sont mentionnées dans le tableau ci-dessous.

| PRINCIPALES CARACTERISTIQUES PHYSICO-CHIMIQUES DES FORMULATIONS | FORMULATIONS DU TYPE VINYLIQUE (FAMILLE AFNOR I CLASSE 7 a 1) | |
|---|---|---|
| DESIGNATION | INVENTION | TEMOIN |
| Extrait sec en poids (%) | 31,9 | 32,6 |
| Extrait sec en volume (%) | 18,3 | 18,0 |
| Pigments (% volume du feuil sec) | 26,8 | 26,3 |
| Pigments (% poids de peinture) | 13,7 | 14,7 |
| Masse volumique peinture (g/cm$^3$ | 0,98 | 1,01 |
| Finesse de broyage | 7 | 7 |

On applique les formulations selon l'invention et des 5 témoins cités en deux couches sur des éprouvettes en acier ayant subi une préparation de surface de tyep SA3 selon la norme suédoise SIS 05 59 00 - 1967.

L'épaisseur totale moyenne du feuil sec est de 85 micromêtres.

Les résultats des essais obtenus avec la formulation de peinture selon l'invention par rapport à ceux obtenus avec les formulations témoins sont résumés dans le tableau ci-après.

| ESSAIS COMPARATIFS REALISES DESIGNATION | PROTOCOLES OU NORMES DE REFERENCE | RESULTATS Invention comparée au témoin (1) | RESULTATS Invention comparée au témoin (2) | RESULTATS Invention comparée au témoin (3) | RESULTATS Invention comparée au témoin (4) | RESULTATS Invention comparée au témoin (5) |
|---|---|---|---|---|---|---|
| Essai accéléré de corrosion au brouillard salin 1160 h | Protocole DPCM n°1051/CERTSM/87 | + + | + + | + | + + | + + |
| Exposition à la chaleur humide 6 semaines | G621-P10-4 312/1 | + | + | - | + | + |
| Adhérence par quadrillage avant exposition au brouillard salin | AFNOR NFT 30038 | (=) | (=) | (=) | (=) | (=) |
| Adhérence par quadrillage après exposition au brouillard salin 1160 h | AFNOR NFT 30038 | (=) | + + | (=) | + | + + |
| Essai d'impact par chute d'une masse (avant brouillard salin) | AFNOR NFT 30030 | (=) | (=) | (=) | (=) | (=) |
| Essai d'impact par chute d'une masse (après brouillard salin) | AFNOR NFT 30030 | (=) | (=) | (=) | (=) | (=) |
| Essai d'adhérence par arrachement (avant brouillard salin) | AFNOR NFT 30052 | + + | (=) | + | - | + + |
| Essai d'adhérence par arrachement (après brouillard salin) | AFNOR NFT 30052 | + + | + + | + | + + | + + |
| Essai d'adhérence sous jet d'eau haute pression 180 bars (avant brouillard salin) | PROTOCOLE DPCM/ CERTSM | - | (=) | (=) | - | + |
| Essai d'adhérence sous jet d'eau haute pression 180 bars (après brouillard salin) | PROTOCOLE DPCM/ CERTSM | + | + + | (=) | + + | + + |
| Aptitude au stockage en magasin 1 an (évolution de la viscosité) | Mesures périodiques de la viscosité KREBS-STORMER | - | - | (=) | - | - |
| Essai d'exposition aux embruns (1 an) | G621-P10-4-212 pupitre d'exposition aux embruns situé à la jetée de PIPADY (rade de Toulon) | + | - | + + | + + | + |

LEGENDE :
- `-` = Comportement très légèrement inférieur à celui du témoin.
- `(=)` = comparable à celui du témoin.
- `+` = légèrement supérieur à celui du témoin.
- `+ +` = très supérieur à celui du témoin.

EXEMPLE 5

Ou prépare une formulation de peinture du type caoutchouc chloré (famille AFNOR I CLASSE 8a) renfermant des pigments selon l'invention et on la compare à 5 peintures témoins de composition semblable, respectivement à base de chromate de zinc (1), à base de borosilicate de calcium (2), à base de molybdate de zinc (3), à base de triphosphate d'aluminium modifié (4) et à base phosphate basique de zinc et de molybdène (5).

Les constituants de ces 6 formulations de peinture figurent dans le tableau ci-dessous.

| DESIGNATION CONSTITUANTS | PARTIES EN POIDS (INVENTION) | PARTIES EN POIDS TEMOIN(1) | PARTIES EN POIDS TEMOIN(2) | PARTIES EN POIDS TEMOIN(3) | PARTIES EN POIDS TEMOIN(4) | PARTIES EN POIDS TEMOIN(5) |
|---|---|---|---|---|---|---|
| PIGMENTS | | | | | | |
| HYDROXY-8-QUINOLEATE DE ZINC | 2,95 | - | - | - | - | - |
| PHOSPHATE DE ZINC TETRAHYDRATE | 11,75 | - | - | - | - | - |
| CHROMATE DE ZINC TYPE INSOLUBLE | - | 19,3 | - | - | - | - |
| BOROSILICATE DE CALCIUM | - | - | 13,94 | - | - | - |
| MOLYBDATE DE ZINC | - | - | - | 27,13 | - | - |
| TRIPHOSPHATE D'ALUMINIUM MODIFIE | - | - | - | - | 16,62 | - |
| PHOSPHATE BASIQUE DE ZINC ET DE MOLYBDENE | - | - | - | - | - | 19,84 |
| TALC MICRONISE | 2,5 | 2,5 | 2,5 | 2,5 | 2,5 | 2,5 |
| NOIR DE CARBONE | 0,7 | 0,7 | 0,7 | 0,7 | 0,7 | 0,7 |
| OXYDE DE FER ROUGE SYNTHETIQUE | 5,8 | 5,8 | 5,8 | 5,8 | 5,8 | 5,8 |
| RESINES ET ADJUVANTS | | | | | | |
| RESINE CAOUTCHOUC CLORE 10 CPS | 13,1 | 13,1 | 13,1 | 13,1 | 13,1 | 13,1 |
| PARAFFINE CHLOREE A 42% DE CHLORE | 5,8 | 5,8 | 5,8 | 5,8 | 5,8 | 5,8 |
| PARAFFINE CHLOREE A 70% DE CHLORE | 8,0 | 8,0 | 8,0 | 8,0 | 8,0 | 8,0 |
| AGENT THIXOTROPANT | 1,4 | 1,4 | 1,4 | 1,4 | 1,4 | 1,4 |
| SOLVANTS ET DILUANTS | | | | | | |
| ACETATE D'ETHOXYPROPANOL | 8,5 | - | 8,5 | 8,5 | 8,5 | 8,5 |
| ACETATE D'ETHYLGLYCOL | - | 8,5 | - | - | - | - |
| XYLENE | 34,9 | 34,9 | 34,9 | 34,9 | 34,9 | 34,9 |
| TOTAUX | 95,4 | 100,0 | 94,64 | 107,83 | 97,32 | 100,54 |

Les caractéristiques physico-chimiques des formulations de peintures anticorrosives selon l'invention et de celle à base de chromate de zinc sont mentionnées dans le tableau ci-dessous.

| PRINCIPALES CARACTERISTIQUES PHYSICO-CHIMIQUES DES FORMULATIONS | FORMULATIONS DU TYPE CAOUTCHOUC CHLORE (FAMILLE AFNOR I CLASSE 8a) | |
|---|---|---|
| DESIGNATION | INVENTION | TEMOIN |
| Extrait sec en poids (%) | 54,5 | 56,6 |
| Extrait sec en volume (%) | 35,7 | 35,8 |
| Pigments (% volume du feuil sec) | 28,7 | 28,6 |
| Pigments (% poids de peinture) | 24,8 | 28,3 |
| Masse volumique peinture (g/cm$^3$) | 1,24 | 1,3 |
| Finesse de broyage | 6 | 6 |

On applique les deux formulations selon l'invention et des 5 témoins cités en trois couches sur des éprouvettes en acier ayant une préparation de surface de type SA3 selon la norme suédoise SIS 05 59 00 - 1967.

L'épaisseur totale moyenne du feuil sec est de 210 micromêtres. Les résultats des essais obtenus avec la formulation de peinture selon l'invention par rapport à ceux obtenus avec les 5 formulations témoins sont résumés dans le tableau ci-après.

| ESSAIS COMPARATIFS REALISES DESIGNATION | PROTOCOLES OU NORMES DE REFERENCE | RESULTATS Invention comparée au témoin (1) | RESULTATS Invention comparée au témoin (2) | RESULTATS Invention comparée au témoin (3) | RESULTATS Invention comparée au témoin (4) | RESULTATS Invention comparée au témoin (5) |
|---|---|---|---|---|---|---|
| Essai accéléré de corrosion au brouillard salin 1160 h | Protocole DPCM n°1051/CERTSM/87 | + | + | + + | + + | + + |
| Exposition à la chaleur humide 6 semaines | G621-P10-4 312/1 | + + | + + | + | + + | + |
| Adhérence par quadrillage avant exposition au brouillard salin | AFNOR NFT 30038 | (=) | (=) | (=) | (=) | (=) |
| Adhérence par quadrillage après exposition au brouillard salin | AFNOR NFT 30038 | + + | + | + | + + | + + |
| Essai d'impact par chute d'une masse (avant brouillard salin) | AFNOR NFT 30030 | (=) | (=) | (=) | (=) | (=) |
| Essai d'impact par chute d'une masse (après brouillard salin) | AFNOR NFT 30030 | (=) | (=) | + | (=) | (=) |
| Essai d'adhérence par arrachement (avant brouillard salin) | AFNOR NFT 30062 | - - | - | - - | - | - |
| Essai d'adhérence par arrachement (après brouillard salin) | AFNOR NFT 30062 | - | + + | + + | + + | - |
| Essai d'adhérence sous jet d'eau haute pression 180 bars (avant brouillard salin) | PROTOCOLE DPCM/CERTSM | + + | + + | + | + | + + |
| Essai d'adhérence sous jet d'eau haute pression 180 bars (après brouillard salin) | PROTOCOLE DPCM/CERTSM | + + | + | + + | + + | + |
| Aptitude au stockage en magasin 1 an (évolution de la viscosité) | Mesures périodiques de la viscosité KREBS-STORMER | (=) | + | - | (=) | + |
| Essai d'exposition aux embruns (1 an) | G621-P10-4-212 pupitre d'exposition aux embruns situé à la jetée de PIPADY (rade de Toulon) | (=) | (=) | + + | + + | + + |

LEGENDE - = Comportement très légèrement inférieur à celui du témoin.
(=) = comparable à celui du témoin.
+ = légèrement supérieur à celui du témoin
+ + = très supérieur à celui du témoin.

EXEMPLE 6

On prépare une formulation de peinture primaire réactive au butyral polyvinylique renfermant des pigments selon l'invention et on la compare à une peinture témoin au chromate de zinc. Les constituants de ces deux formulations de peintures figurent dans le tableau ci-dessous.

| DESIGNATION CONSTITUANTS | PARTIES EN POIDS (INVENTION) | | PARTIES EN POIDS (TEMOIN) | |
|---|---|---|---|---|
| PIGMENTS ET MATIERES DE CHARGE | ELEMENT A | ELEMENT B | ELEMENT A | ELEMENT B |
| HYDROXY-8-QUINOLEATE DE ZINC | 1.00 | - | - | - |
| PHOSPHATE DE ZINC TETRAHYDRATE | 6.70 | - | - | - |
| CHROMATE DE ZINC TYPE INSOLUBLE | - | - | 11.00 | - |
| VERT DE PHTALOCYANINE BLEUATRE | 0.20 | - | 0.10 | - |
| DIOXYDE DE RUTILE | 1.0 | - | 1.00 | - |
| TALC MICRONISE | - | - | 3.00 | - |
| *RESINES PLASTIFIANTS ET ADJUVANTS* | A | B | A | B |
| BUTYRAL POLYVINYLIQUE | 11.70 | - | 9.00 | - |
| BENTONE 27 | 0.20 | - | 0.90 | - |
| TEXAPHOR "SPECIAL" (72% ext. sec) | 1.80 | - | 0,90 | - |
| ACIDE PHOSPHORIQUE (85%) | - | 22.40 | - | 22.40 |
| *SOLVANTS ET DILUANTS* | A | B | A | B |
| BUTANOL NORMAL | 66.30 | 72.20 | 68,00 | 72,20 |
| ALCOOL ETHYLIQUE à 95% | 9.30 | 5.40 | 5.20 | 5.40 |
| EAU DEMINERALISEE | 1.80 | - | 1.00 | - |
| *TOTAUX* | 100.00 | 100,00 | 100,00 | 100.00 |
| *DOSAGES EN POIDS CORRESPONDANTS* | ELEMENT A : 100g ELEMENT B : 25,1g | | ELEMENT A : 100g ELEMENT B : 19.3g | |

On applique ces deux formulations sur des tóles en acier de 500x500x3mm; décapées par projection d'abrasif (sablage) au degré SA3 selon la norme suédoise SIS 05 5900-1967.

L'épaisseur moyenne du feuil sec est de 10 à 15 micromètres.

L'exposition a eu lieu sur pupitre incliné à 45 degrés en atmosphére maritime, en période hivernale (janvier-février 1990), pendant 5 semaines.

Les résultats des essais de résistance à la corrosion sont les suivants :

Formulation selon l'invention : pratiquement aucune corrosion n'est observée (elle est inférieure à 5% de la surface)

Formulation témoin au chromate de zinc : importante corrosion sur environ 50% de la surface des la première semaine d'exposition.

**EP 0 532 710 B1**

**Revendications**

1. Composition pigmentaire , anticorrosive destinée au revêtement, caractérisée en ce qu'elle contient de l'hydroxy-8-quinoléate de zinc et au moins un pigment de type connu.

2. Composition selon la revendication 1 caractérisée en ce qu'elle contient au moins l'un des pigments suivants : phosphate de zinc, phosphate de fer, phosphate de chrome, phosphate de manganèse, phosphate d'aluminium, oxyde d'aluminium, ferrite de calcium, ferrite de zinc, ferrite de magnésium, ferrite de baryum, ferrite de fer, borosilicate de calcium, borosilicate de baryum, phosphosilicate de calcium,phosphosilicate de baryum.

3. Composition pigmentaire selon la revendication 2, caractérisée en ce qu'elle est constituée par un mélange pulvérulent de pigments comprenant, en combinaison, les pourcentages étant exprimés par rapport au poids total du mélange de pigments,
   a) 0,5% à 99,5% en poids d'hydroxy-8-quinoléate de zinc,
   b) 0,5% à 99,5% en poids d'au moins un des pigments suivants :
   phosphate de zinc, phosphate de fer, phosphate de chrome, phosphate de manganèse, phosphate d'aluminium, oxyde d'aluminium, ferrite de calcium, ferrite de zinc, ferrite de magnésium, ferrite de baryum, ferrite de fer, borosilicate de calcium, borosilicate de baryum, phosphosilicate de calcium, phosphosilicate de baryum, le complément étant constitué par des pigments connus dans ce type d'application.

4. Composition selon la revendication 3, caractérisée en ce qu'elle contient 5 à 15% en poids de constituant a et de 30 à 60% en poids de constituant b.

5. Composition selon la revendication 4, caractérisée en ce que le constituant b est un phosphate de zinc.

6. Composition selon la revendication 5, caractérisée en ce que le constituant b est le diphosphate de zinc tétrahydraté, $Zn_3(PO_4)_2$, $4H_2$ 0.

7. Composition selon la revendication 6, caractérisée en ce qu'elle contient de 5 à 15% en poids d'hydroxy-8-quinoléate de zinc et de 30 à 60% en poids de diphosphate de zinc tétrahydraté.

8. Peinture caractérisée en ce qu'elle contient une composition pigmentaire anticorrosive selon la revendication 1.

9. Peinture selon la revendication 8, caractérisée en ce qu'elle est constituée par des liants en dispersion aqueuse ou en solution dans un solvant organique.

10. Peinture selon la revendication 9, caractérisée en ce que les liants sont choisis parmi les composés polymères acryliques, vinyliques, les résines alkydes, les résines époxydiques, les polyuréthanes, le caoutchouc chloré, le butyral polyvinylique.

**Claims**

1. Anti-corrosive pigmentary composition for coating, characterised in that it contains zinc 8-hydroxyquinolate and at least one known pigment.

2. Composition according to Claim 1 characterised in that it contains at least one of the following pigments : zinc phosphate, iron phosphate, chromium phosphate, manganese phosphate, aluminum phosphate, aluminum oxide, calcium ferrite, zinc ferrite, magnesium ferrite, barium ferrite, iron ferrite, calcium borosilicate, barium borosilicate, calcium phosphosilicate, barium phosphosilicate.

3. Pigmentary composition according to Claim 2, characterised in that it consists in a pigment pulverulent mixture including, in combination, the percentages being expressed in comparison to the total weight of the pigment mixture :
   a) 0.5-99.5% by weight of zinc 8-hydroxyquinolate,

20

b) 0.5-99.5% by weight of at least one of the following pigments : zinc phosphate, iron phosphate, chromium phosphate, manganese phosphate, aluminum phosphate, aluminum oxide, calcium ferrite, zinc ferrite, magnesium ferrite, barium ferrite, iron ferrite, calcium borosilicate, barium borosilicate, calcium phosphosilicate, barium phosphosilicate, the complement consisting in pigments known in that type of application.

4. Composition according to Claim 3, characterised in that it contains 5-15% by weight of component a and 30-60% by weight of component b.

5. Composition according to Claim 4, characterised in that component b is a zinc phosphate.

6. Composition according to Claim 5, characterised in that the component b is zinc tetrahydric diphosphate, $Zn_3 (PO_4)_2$, $4H_2O$.

7. Composition according to Claim 6, characterised in that it contains 5-15% by weight of zinc 8-hydroxyquinolate and 30-60% by weight of zinc tetrahydric diphosphate.

8. Painting characterised in that it contains an anti-corrosive pigmentary composition according to Claim 1.

9. Painting according to Claim 8, characterised in that it consists in binders in aqueous dispersion or in solution in an organic solvent.

10. Painting according to Claim 9, characterised in that the binders are selected among acrylic polymeric compounds, vinyl, alkyde resins, epoxy resins, polyurethanes, chlorinated rubber, polyvinyl butyral.

**Patentansprüche**

1. Korrosionsschützende Pigmentmischung für Beschichtungen, dadurch gekennzeichnet, daß sie Hydroxy-8-Zinkquinolat und mindestens ein Pigment bekannter Art enthält.

2. Mischung nach Anspruch 1, dadurch gekennzeichnet, daß sie zumindest eins der folgenden Pigmente enthält: Zinkphosphat, Eisenphosphat, Chromphosphat, Manganphosphat, Aluminiumphosphat, Aluminiumoxid, Kalziumferrit, Zinkferrit, Magnesiumferrit, Bariumferrit, Eisenferrit, Kalziumborsilikat, Bariumborsilikat, Kalziumphosphorsilikat, Bariumphosphorsilikat.

3. Pigmentmischung nach Anspruch 2, dadurch gekennzeichnet, daß sie aus einer pulverigen Pigmentmischung besteht, mit folgender Kombination (die Prozentsätze beziehen sich auf das Gesamtgewicht der Pigmentmischung):
   a) 0,5 % bis 99,5 % Hydroxy-8-Zinkquinolat.
   b) 0,5 % bis 99,5 % zumindest eines der folgenden Pigmente: Zinkphosphat, Eisenphosphat, Chromphosphat, Manganphosphat, Aluminiumphosphat, Aluminiumoxid, Kalziumferrit, Zinkferrit, Magnesiumferrit, Bariumferrit, Eisenferrit, Kalziumborsilikat, Bariumborsilikat, Kalziumphosphorsilikat, Bariumphosphorsilikat, wobei der Rest aus bei dieser Anwendungsart bekannten Pigmenten besteht.

4. Mischung nach Anspruch 3, dadurch gekennzeichnet, daß sie 5 bis 15 % des Bestandteils a) und 30 bis 60 % des Bestandteils b) enthält.

5. Mischung nach Anspruch 4, dadurch gekennzeichnet, daß der Bestandteil b) ein Zinkphosphat ist.

6. Mischung nach Anspruch 5, dadurch gekennzeichnet, daß der Bestandteil b) ein Tetradihydrogenzinkphosphat $Zn_3(PO_4)_2$, $4H_2O$ ist.

7. Mischung nach Anspruch 6, dadurch gekennzeichnet, daß sie aus 5 bis 15 % Hydroxy-8-Zinkquinolat und 30 bis 60 % Tetradihydrogenzinkphosphat besteht.

8. Farbe, dadurch gekennzeichnet, daß sie eine korrosionsschützende Pigmentmischung nach Anspruch 1 enthält.

9.  Farbe nach Anspruch 8, dadurch gekennzeichnet, daß sie aus Bindemitteln in wässriger Dispersion oder in Lösungen in einem organischen Lösemittel besteht.

10. Farbe nach Anspruch 9, dadurch gekennzeichnet, daß die Bindemittel unter Acryl- oder Vinylpolymerverbindungen, Alkydharzen, Epoxyharzen, Polyurethanen, Chlorkautschuk, Polyvinylbutyrol gewählt werden.